(19) Europäisches Patentamt / European Patent Office / Office européen des brevets

(11) **EP 4 752 781 A1**

(12) **EUROPEAN PATENT APPLICATION**

(43) Date of publication:
03.06.2026 Bulletin 2026/23

(21) Application number: 25203012.7

(22) Date of filing: 18.09.2025

(51) International Patent Classification (IPC):
*G06F 40/216* (2020.01) *G06F 40/30* (2020.01)
*G06F 16/335* (2019.01)

(52) Cooperative Patent Classification (CPC):
**G06F 40/216; G06F 40/30;** G06F 16/335

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **29.11.2024 IN 202421093804**

(71) Applicant: **Tata Consultancy Services Limited Maharashtra (IN)**

(72) Inventors:
• **BABU, Raja**
**411006 Pune, Maharashtra (IN)**
• **BHOOKYA, Uday Chandra**
**411006 Pune, Maharashtra (IN)**
• **NATU, Maitreya**
**411006 Pune, Maharashtra (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **DATA DRIVEN INSIGHT GENERATION AND CREATION OF CONTEXTUALLY CONSISTENT CHAINS THEREOF**

(57) With increasing focus on observability and analytics, organizations are flooded with analytics insights and often struggle to sift through these insights to identify the relevant ones. When it comes to defining the relevance of an insight, there is no single answer. Different users may have different preferences, and these preferences may change with time. Furthermore, when it comes to data-driven insights, user journey does not stop at one single insight but often leads to a chain of insights to create a story. Present disclosure addresses these technical problems in the context of insights derived for IT operations. More specifically, insights are recommended based on user preferences, wherein the system adapts the insight search based on user's likes and dislikes, and chain insights together to form data stories to serve different use cases.

FIG. 2

**Description**

CROSS-REFERENCE TO RELATED APPLICATIONS AND PRIORITY

The present application claims priority to Indian application no. 202421093804, filed on November 29, 2024.

TECHNICAL FIELD

The disclosure herein generally relates to data analytics, and, more particularly, to data driven insight generation and creation of contextually consistent chains thereof.

BACKGROUND

Observability is one of the most popular themes in today's enterprise Information Technology (IT) operations. Industries are putting increasing focus on bringing end-to-end visibility into their IT operations and the impact of IT on business. Data-driven insights are being generated to analyze various aspects of IT operations such as performance, capacity, availability, security, etc. However, given the scale of the IT infrastructure and the volume of data getting analyzed, the business and operations teams face insight fatigue. A large number of insights get generated making it very difficult for the users to decide where to start, which insight to look next, and more importantly how to connect the dots across insights to see the bigger picture.

An enterprise IT infrastructure consists of thousands of entities including applications, services, application servers, databases, virtual machines, disks, network switches, etc. Each of these entities is associated with various metrics and events. For instance, an application server is associated with metrics such as application response time, heap utilization, thread pool utilization, etc. An application server is also associated with events such as URL failure or change requests such as version upgrades. Analysis of such metrics and events across different entities leads to different types of insights.

Different users consume these insights for different purposes. The IT operations teams use these insights to diagnose and resolve incidents. The IT architects use these insights to improve operations and plan for the future. Furthermore, different teams are interested in insights related to the business functions relevant to them. Hence, the first challenge that is presented here is to bring out the most relevant insight to the user based on their preferences.

The second challenge that is presented here is the fact that while these insights point to interesting information, most often they fail to provide the complete picture which often comes by looking at multiple insights together. Consider the case where an enterprise operations manager receives an insight related to a frequent application failure. While this insight might be of interest to them, but it would not be enough. They would have follow-up questions such as what is causing the application failure, or what is the effect of the application failure on the business functions, or are there other applications observing similar problems, etc. Instead of looking at many of these insights in isolations, being able to see chains of connected insights helps see the bigger picture and take informed decisions.

Looking at this chain of insights together gives a better picture of the problem at hand. In the absence of such chains, a user is left with the arduous task of browsing through thousands of insights across thousands of entities based on their intuition.

Interestingly, similar problems are faced in other areas such as online retail, video-on-demand services, social networks, etc. And these industries have found creative ways to enable users to navigate their inventory. Despite the differences in content or products, the underlying challenge remains consistent: how to effectively manage and present vast amounts of information to users without overwhelming them. In response to this challenge, innovative solutions have emerged across various sectors. For instance, in online retail, companies utilize recommendation engines that analyze user behavior and preferences to suggest products, similarly video-on-demand services recommend movies or shows based on viewing history and genre preferences, social networks implement features such as personalized feeds to help users sift through the abundance of content and engage with relevant discussions. Moreover, as industries evolve in their approaches to information management, the necessity for comprehensive solutions becomes increasingly apparent. Most of the past work focuses on making isolated disconnected recommendations. Most of the industry domains such as retail or video-on-demand do not even face the need to create chains of recommendations. Unlike these domains, while consuming the insights IT operations, individual insights are not as useful as the chains of insights.

SUMMARY

Embodiments of the present disclosure present technological improvements as solutions to one or more of the above-mentioned technical problems recognized by the inventors in conventional systems.

For example, in one aspect, there is provided a processor implemented method for data driven insight generation and creation of contextually consistent chains thereof. The method comprises receiving, via one or more hardware processors, a first data, a second data, and a third data, pertaining to one or more event insights; generating, via the one or more hardware processors, a first insight vector representation, a second insight vector representation, and a third insight vector representation, pertaining to the first data, he second data, and the third data respectively; generating, via the one or more hardware processors, a final insight vector representation based on the first insight vector representation, the second insight vector representation, and the third insight vector representation; assigning, via the one or more hardware processors, a weightage to each feature and an associated feature value for each of the first insight vector representation, the second insight vector representation, and the third insight vector representation comprised in the final insight vector representation; computing, via the one or more hardware processors, a first interesting score, a second interesting score, and a third interesting score for each of the first insight vector representation, the second insight vector representation, and the third insight vector representation comprised in the insight vector representation respectively based on the assigned weightage; computing, via the one or more hardware processors, a final interesting score based on the first interesting score, the second interesting score, and the third interesting score; generating, via the one or more hardware processors, a first user preference vector, and a second user preference vector using a user profile database; and generating, via the one or more hardware processors, a recommended set of insights based on (i) a temperature value measure indicative of a recommendation adherence to an insight associated with one of (a) a user preference, and (b) a statistical interesting score, (ii) the first insight vector representation, the second insight vector representation, and the third insight vector representation, (iii) the final interesting score, and (iv) the first user preference vector, and the second user preference vector.

In an embodiment, the assigned weightage is based on the nature of each feature comprised in the final insight vector representation.

In an embodiment, the first insight vector representation is generated by determining a number of parameters and an associated value comprised in the first data; transforming the number of parameters into a specific value to obtain a set of transformed parameters; and applying a one-hot-encoding technique on the set of transformed parameters to obtain the first insight vector representation.

In an embodiment, the second insight vector representation and the third insight vector representation are generated by creating a n-bit vector for one or more entities comprised in the second data and the third data associated with a graph respectively; initializing a plurality of bits to a specific value; assigning, based on the plurality of initialized bits, a weight to each entity amongst the one or more entities and an entity value that is reachable from an insight node in the graph, wherein the assigned weight is based on a shortest path determined between at least two nodes; and obtaining the second insight vector representation and the third insight vector representation based on the assigned weight.

In an embodiment, the method further comprises generating one or more contextually consistent chains of insights using (i) the first user preference vector, and the second user preference vector, and (ii) the first insight vector representation, the second insight vector representation, and the third insight vector representation.

In an embodiment, one or more contextually consistent chains of insights are generated by identifying a relationship between two or more insights using (a) an associated similarity score derived from (i) the first user preference vector, and the second user preference vector, and (ii) the first insight vector representation, the second insight vector representation, and the third insight vector representation, and (b) an associated weight; generating the one or more chains of insights that exhibit a specific connection based on the identified relationship; and applying a divergence measuring technique on the one or more chains of insights to obtain one or more contextually consistent chains of insights.

In an embodiment, quality of the one or more contextually consistent chains of insights is assessed based on at least one of (i) a length of a chain, (ii) a traversing quality in a topological path and a topological sequence, (iii) a connection of insights of two or more entities that belong to a specific subtree in an insight vector representation, and (iv) an associated behavioral similarity.

In another aspect, there is provided a processor implemented system for data driven insight generation and creation of contextually consistent chains thereof. The system comprises: a memory storing instructions; one or more communication interfaces; and one or more hardware processors coupled to the memory via the one or more communication interfaces, wherein the one or more hardware processors are configured by the instructions to receive a first data, a second data, and a third data, pertaining to one or more event insights; generate a first insight vector representation, a second insight vector representation, and a third insight vector representation, pertaining to the first data, the second data, and the third data respectively; generate a final insight vector representation based on the first insight vector representation, the second insight vector representation, and the third insight vector representation; assign a weightage to each feature and an associated feature value for each of the first insight vector representation, the second insight vector representation, and the third insight vector representation comprised in the final insight vector representation; compute a first interesting score, a second interesting score, and a third interesting score for each of the first insight vector representation, the second insight vector representation, and the third insight vector representation comprised in the insight vector representation respectively based on the assigned weightage; compute a final interesting score based on the first interesting score, the second interesting score, and the third interesting score; generate a first user preference vector, and a second user preference vector using a user profile database; and generate a recommended set of insights based on (i) a temperature value measure indicative of a recommendation adherence to an insight associated with one of (a) a user preference, and (b) a statistical interesting score, (ii) the first insight vector representation, the second insight vector representation, and the third insight vector representation, (iii) the final interesting score, and (iv) the first user preference vector, and the second user preference vector.

In an embodiment, the assigned weightage is based on a nature of each feature comprised in the final insight vector representation.

In an embodiment, the first insight vector representation is generated by determining a number of parameters and an associated value comprised in the first data; transforming the number of parameters into a specific value to obtain a set of transformed parameters; and applying a one-hot-encoding technique on the set of transformed parameters to obtain the first insight vector representation.

In an embodiment, the second insight vector representation and the third insight vector representation are generated by creating a n-bit vector for one or more entities comprised in the second data and the third data associated with a graph respectively; initializing a plurality of bits to a specific value; assigning, based on the plurality of initialized bits, a weight to each entity amongst the one or more entities and an entity value that is reachable from an insight node in the graph, wherein the assigned weight is based on a shortest path determined between at least two nodes; and obtaining the second insight vector representation and the third insight vector representation based on the assigned weight.

In an embodiment, the one or more hardware processors are further configured by the instructions to generate one or more contextually consistent chains of insights using (i) the first user preference vector, and the second user preference vector, and (ii) the first insight vector representation, the second insight vector representation, and the third insight vector representation.

In an embodiment, the one or more contextually consistent chains of insights are generated by identifying a relationship between two or more insights using (a) an associated similarity score derived from (i) the first user preference vector, and the second user preference vector, and (ii) the first insight vector representation, the second insight vector representation, and the third insight vector representation, and (b) an associated weight; generating the one or more chains of insights that exhibit a specific connection based on the identified relationship; and applying a divergence measuring technique on the one or more chains of insights to obtain one or more contextually consistent chains of insights.

In an embodiment, quality of the one or more contextually consistent chains of insights is assessed based on at least one of (i) a length of a chain, (ii) a traversing quality in a topological path and a topological sequence, (iii) a connection of insights of two or more entities that belong to a specific subtree in an insight vector representation, and (iv) an associated behavioral similarity.

In yet another aspect, there are provided one or more non-transitory machine-readable information storage mediums comprising one or more instructions which when executed by one or more hardware processors cause data driven insight generation and creation of contextually consistent chains thereof by receiving a first data, a second data, and a third data, pertaining to one or more event insights; generating a first insight vector representation, a second insight vector representation, and a third insight vector representation, pertaining to the first data, he second data, and the third data respectively; generating a final insight vector representation based on the first insight vector representation, the second insight vector representation, and the third insight vector representation; assigning a weightage to each feature and an associated feature value for each of the first insight vector representation, the second insight vector representation, and the third insight vector representation comprised in the final insight vector representation; computing a first interesting score, a second interesting score, and a third interesting score for each of the first insight vector representation, the second insight vector representation, and the third insight vector representation comprised in the insight vector representation respectively based on the assigned weightage; computing a final interesting score based on the first interesting score, the second interesting score, and the third interesting score; generating a first user preference vector, and a second user preference vector using a user profile database; and generating a recommended set of insights based on (i) a temperature value measure indicative of a recommendation adherence to an insight associated with one of (a) a user preference, and (b) a statistical interesting score, (ii) the first insight vector representation, the second insight vector representation, and the third insight vector representation, (iii) the final interesting score, and (iv) the first user preference vector, and the second user preference vector.

In an embodiment, the assigned weightage is based on a nature of each feature comprised in the final insight vector representation.

In an embodiment, the first insight vector representation is generated by determining a number of parameters and an associated value comprised in the first data; transforming the number of parameters into a specific value to obtain a set of transformed parameters; and applying a one-hot-encoding technique on the set of transformed parameters to obtain the first insight vector representation.

In an embodiment, the second insight vector representation and the third insight vector representation are generated by creating a n-bit vector for one or more entities comprised in the second data and the third data associated with a graph respectively; initializing a plurality of bits to a specific value; assigning, based on the plurality of initialized bits, a weight to each entity amongst the one or more entities and an entity value that is reachable from an insight node in the graph, wherein the assigned weight is based on a shortest path determined between at least two nodes; and obtaining the second insight vector representation and the third insight vector representation based on the assigned weight.

In an embodiment, the one or more instructions which when executed by the one or more hardware processors further cause generating one or more contextually consistent chains of insights using (i) the first user preference vector, and the second user preference vector, and (ii) the first insight vector representation, the second insight vector representation, and the third insight vector representation.

In an embodiment, one or more contextually consistent chains of insights are generated by identifying a relationship between two or more insights using (a) an associated similarity score derived from (i) the first user preference vector, and the second user preference vector, and (ii) the first insight vector representation, the second insight vector representation, and the third insight vector representation, and (b) an associated weight; generating the one or more chains of insights that exhibit a specific connection based on the identified relationship; and applying a divergence measuring technique on the one or more chains of insights to obtain one or more contextually consistent chains of insights.

In an embodiment, quality of the one or more contextually consistent chains of insights is assessed based on at least one of (i) a length of a chain, (ii) a traversing quality in a topological path and a topological sequence, (iii) a connection of insights of two or more entities that belong to a specific subtree in an insight vector representation, and (iv) an associated behavioral similarity.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 depicts an exemplary system for data driven insight generation and creation of contextually consistent chains thereof, in accordance with an embodiment of the present disclosure.
FIG. 2 depicts an exemplary flow chart illustrating a method for data driven insight generation and creation of contextually consistent chains thereof, using the system of FIG. 1, in accordance with an embodiment of the present disclosure.
FIGS. 3A through 3C depict a first insight vector representation, a second insight vector representation, and a third insight vector representation, in accordance with an embodiment of the present disclosure.
FIG. 4 is a graphical representation illustrating the number of clicks required to reach the insight of interest with varying temperature value measure, in accordance with an embodiment of the present disclosure.
FIG. 5 is a graphical representation illustrating the number of clicks required to infer the chains manually, in accordance with an embodiment of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The present disclosure addresses the above technical problem of simplifying the consumption of data-driven insights with a specific focus on the insights generated in IT operations. The present disclosure provides a system and method that learns user preferences and creates chains of insights to present a bigger picture that might be of interest to the user. The data-driven insights of IT operations present some unique challenges and opportunities.

The insights are associated with entities and these insights are derived by analyzing the metrics and events on these entities. For example, an application server can be an entity, response time can be an associated metric, and URL failure can be an associated event. Behavioral insights are generated by analysis of these metric and events which infer about anomalies, trends, patterns, etc. Creating chains of insights with similar behavior across entities often leads to viewing a bigger picture. Creating a chain of insights derived from multiple metrics and events of the same entity gives a deeper understanding of the behavior of that entity. The entities are influenced by each other based on how they are topologically connected and how the data and control flow across them. Creating a chain of insights across the topologically connected entities gives a deeper understanding of the cause-effect influences across these entities. To manage these entities on a day-to-day basis, the entities are grouped by locations, teams, business functions, subscriptions, service providers, etc. Such grouping helps to better manage aspects of spend, compliance, updates and upgrades, security, etc. Creating a chain of insights across these logical groups helps in getting an aggregate view of the group.

Given the nature of the consumption of these insights, it is critical to represent an insight such that the relationships across these entities are correctly represented. Only then can the relevant insights be chained together. The present disclosure provides the system and method to model an insight in the form of an insight vector that captures these relationships, and also user preference. There are too many insights present about IT operations. A user may have long term preferences about the business function, geography, etc. But a user may have short-term preferences about viewing insights about performance or capacity, or insights about servers or disks, or other such aspects. The present disclosure provides the system and method that capture the long-term and short-term user preferences in the form of a user preference vector. The system of the present disclosure then uses the insight vector and the user preference vector to recommend the most relevant insight to the present an output that not just recommends one insight, but instead recommends a chain of insights to provide a bigger picture around that insight.

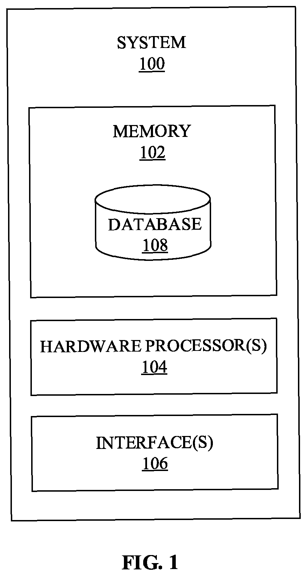

Referring now to the drawings, and more particularly to FIGS. 1 through 5, where similar reference characters denote corresponding features consistently throughout the figures, there are shown preferred embodiments, and these embodiments are described in the context of the following exemplary system and/or method.

FIG. 1 depicts an exemplary system 100 for data driven insight generation and creation of contextually consistent chains thereof, in accordance with an embodiment of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises information such as a first data, a second data, and a third data, pertaining to one or more event insights. The database 108 further comprises various insight vector representations, weightage of each feature and an associated feature value for each of the insight vector representations, interesting scores for each of the insight vector representations, a first user preference vector, and a second user preference vector, recommended set of insights, and the like. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

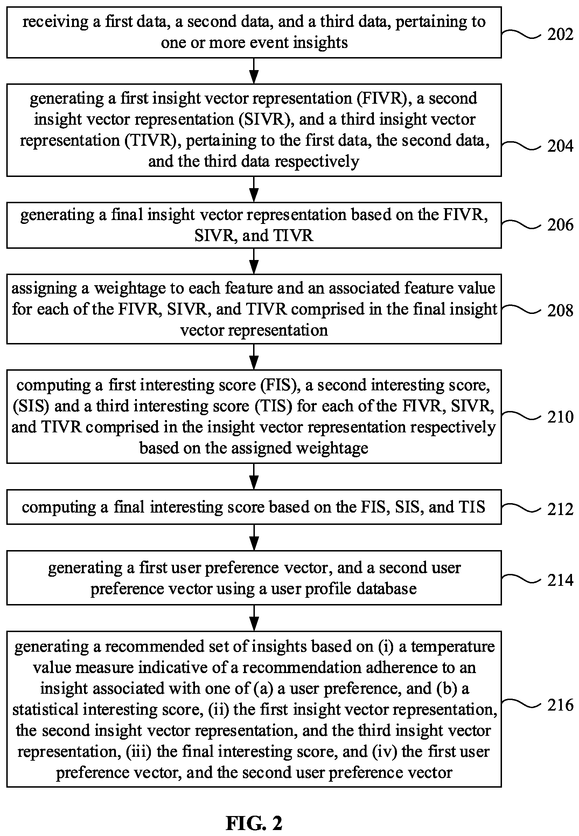

FIG. 2, with reference to FIG. 1, depicts an exemplary flow chart illustrating a method for data driven insight generation and creation of contextually consistent chains thereof, using the system 100 of FIG. 1, in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to components of the system 100 of FIG. 1, and the flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

At step 202 of the method of the present disclosure, the one or more hardware processors 104 receive a first data, a second data, and a third data, pertaining to one or more event insights. The first data is behavioral data, the second data is topology data, and the third data is an inventory data.

At step 204 of the method of the present disclosure, the one or more hardware processors 104 generate a first insight vector representation, a second insight vector representation, and a third insight vector representation, pertaining to the first data, the second data, and the third data respectively. At step 206 of the method of the present disclosure, the one or more hardware processors 104 generate a final insight vector representation based on the first insight vector representation, the second insight vector representation, and the third insight vector representation. The steps 202, 204, and 206 are better understood by way of following description:

An insight gets presented to an end user as a natural language text for the ease of consumption by the end-user. For instance:

*CPU utilization of a server x has significantly increased since last month. It is observing low headroom and increasing trend.*

However, the system 100 needs to model this insight in a representation that best captures various aspects associated with it. This representation lays the foundation for capturing user preferences as well as for creating insight chains. There are several ways to model an insight. Natural Language Processing (NLP) techniques such as BoW (Bag of Words) as known in the art represent texts by counting the frequency of words or TF-IDF (Term Frequency-Inverse Document Frequency) calculates the importance of a word in a document relative to a corpus by considering its frequency and rarity. These are some common ways of vectorization. Word embeddings known in the art provide a more sophisticated way to model an insight. In the present disclosure, instead of treating an insight as a blob of text and using NLP techniques to process it, the system 100 chose to treat each insight as a vector of attributes and encoded these attributes. This provides finer control on modeling and measuring similarity. The system 100 converts each attribute of an insight into a vector using one-hot encoding. A dot product is selected by the system and method of the present disclosure due to its ability to effectively capture both the magnitude and direction of vectors, which is crucial in our context. Its computational efficiency makes it particularly advantageous in high-dimensional spaces, allowing for faster calculations compared to other measures like cosine similarity. It is to be understood by a person having ordinary skill in the art or person skilled in the art that any other operation method may be used/implemented, and such implementation of dot product shall not be construed as limiting the scope of the present disclosure. Furthermore, while embeddings trained on general English data may introduce irrelevant similarities, the dot product maintains consistency and relevance in the specific scope of IT operations. By using the dot product for comparisons, the system 100 ensures accuracy and meaningful results tailored to specific domain. Thus, the dot product emerges as a versatile and efficient tool for assessing similarity in various applications.

As mentioned, an insight in the world of IT operations has 3 key aspects associated with it - (1) its behavioral aspects, (2) its topological connections, and (3) its inventory information. The system 100 creates an insight vector as a 3-tuple vector that captures these aspects. Below illustrates a method of capturing the behavioral properties.

An insight is associated with behavioral attributes derived from analytics such as trends, patterns, change points, outliers, etc. Consider a simple example of the following insight:

*"CPU utilization of Server S1 is observing low average, 1 change point, 43 outliers, increasing trend, and a day-of-week pattern ".*

The system 100 considers that an insight has 5 attributes: number of changepoints, number of outliers, type of trend, type of pattern, and average value. Initial vector representation for the insight is: [ "1 change point", "43 outliers", "increasing trend", "day of week pattern", "low average"].

Next, the system 100 converts numeric vectors to categorical by binning the numeric values into categories of low, medium, and high. The vector now represented as: {low change points, high outliers, increasing trend, day-of-week pattern, low average}.

Next, each attribute is converted into a vector of numbers using one-hot-encoding. In other words, to generate the first insight vector representation a number of parameters and an associated value comprised in the first data are determined. Then the number of parameters is transformed into a specific value to obtain a set of transformed parameters. A one-hot-encoding technique is then applied on the set of transformed parameters to obtain the first insight vector representation.

Consider the attribute - number of change points. It can have 3 different values low, medium, and high. This attribute is thus represented with a 3-bit vector reserving one bit for each possible value of the attribute. Continuing the example, each attribute is represented with multiple bits as follows: {low change, medium high outliers, increasing trend, decreasing trend, constant trend, day-of-week pattern, day-of-month pattern, hour-of-day pattern, no pattern, low average, medium average, high average}.

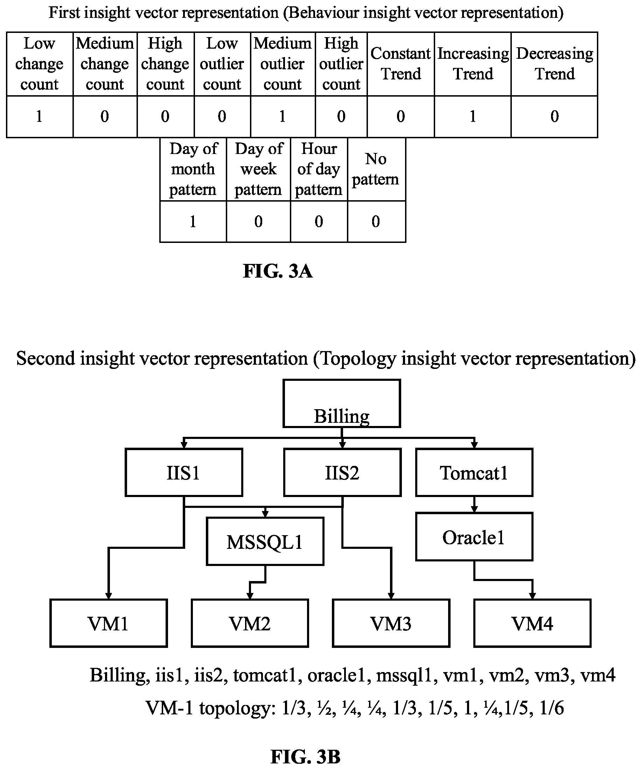

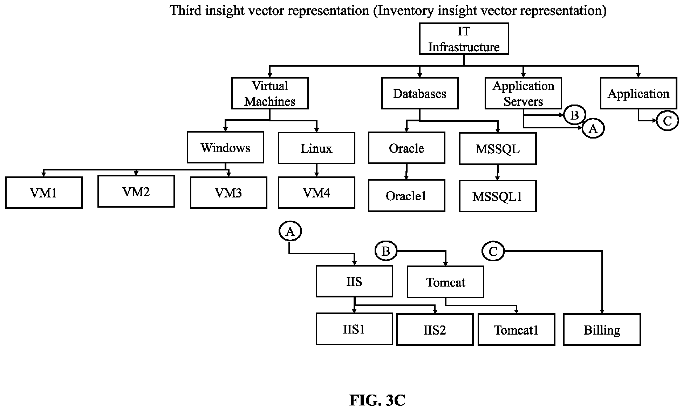

Continuing the example, an insight with low change points, high outliers, increasing trend, and day-of-week pattern is represented with the following 13-bit vector: {1,0,0,0,0,1,0,1,0,0,1,0,0,1,0,0}. FIGS. 3A through 3C presents this vector. More specifically, FIGS. 3A through 3C, with reference to FIGS. 1-2, depict the first insight vector representation, the second insight vector representation, and the third insight vector representation, in accordance with an embodiment of the present disclosure.

It is to be noted that, the system 100 presents the concepts using the example of insight attributes such as changes, trends, outliers, and patterns. But the concepts can be applied to any type of attributes.

Below illustrates a method of capturing the topological properties/information.

An insight is associated with an entity which is topologically connected to other entities. This topology captures the data and control flow across entities. An insight can be present in any node of the topology graph. FIGS. 3A through 3C show an example graph of the insights and their related entities. The system 100 captures this topological information of an insight I1 in the form of a vector as follows:

1. Create an n-bit vector where n is the total number of entities present in the enterprise. In other words, n is the total number of non-leaf nodes in the topology graph.
2. Initialize all bits of the vector to 0.
3. Assign a non-zero weight to each entity X that is reachable from the insight node in the topology.
4. The up tree entities closer to an insight hold higher relevance than the farther ones. Hence, the system 100 assigns higher weight to the up tree entities nearer an insight into the topology tree. This is done by finding the shortest path P(X, I1) between the nodes I1 and X. The weight Wx for entity X is computed as follows:
5.

$$Wx = 1/(|\text{Edges P}(X, I1)| + 1).$$

Below illustrates a method of capturing the inventory properties/information:

While the topology vector captures how different nodes are dependent on each other, the inventory vector helps to organize the estate by different categories and sub-categories. Continuing the IT infrastructure example, inventory information can help group insights by servers or databases or applications. It can also be used to group insights by location or owners or business functions.

FIGS. 3A through 3C present a graph to capture the inventory information of insights. Unlike the topology graph, in the inventory graph, the insights are available only on the leaf nodes. The non-leaf nodes only help create different associations amongst the leaf entities. For example, FIGS. 3A through 3C show that insights I1-I8 are about virtual machines, out of which insights I1-I5 are about Windows® virtual machines.

Similar to the topology vector, this inventory information as a vector is captured as below.

1. Create an n-bit vector where n is the total number of meta-nodes present in the inventory graph. In other words, n is all nodes in the graph except the leaf nodes and the parents of leaf nodes.
2. Initialize all bits of the vector to 0.
3. The system 100 applies the same concept as topology vector to assign a non-zero weight to each entity that is reachable from the insight node in the topology.

In other words, the second insight vector representation and the third insight vector representation are generated by creating a n-bit vector for one or more entities comprised in the second data and the third data associated with a graph respectively. Further, a plurality of bits to a specific value are initialized. Based on the plurality of initialized bits, a weight is assigned to each entity amongst the one or more entities and an entity value that is reachable from an insight node in the graph, wherein the assigned weight is based on a shortest path determined between at least two nodes. The second insight vector representation and the third insight vector representation are obtained based on the assigned weight.

The final insight vector IV(x) for an insight 'x' is created as a tuple of 3 vectors - behavior vector Bx, topology vector Tx, and inventory vector Ix. In other words, the final insight vector representation is obtained based on the first insight vector representation, the second insight vector representation, and the third insight vector representation. Below Table 1 presents an example of these 3 vectors generated for 8 insights. The system 100 uses these vectors to explain the subsequent concepts. For simplicity of explanation, the system 100 and the method have considered binary vectors and not included the calculation of weights.

Table 1

| Insight | Inventory vector | Behaviour vector | Topology vector |
|---------|------------------|------------------|-----------------|
| I1 | 010110010 | 1001100101000000 | 11001100 |
| I2 | 010110001 | 1001101010000000 | 11001100 |
| I3 | 010101010 | 1001100101000000 | 10110010 |
| I4 | 010101001 | 1001101010000000 | 10110010 |
| I5 | 100100110 | 0110011000100000 | 10101001 |

(continued)

| Insight | Inventory vector | Behaviour vector | Topology vector |
|---------|------------------|------------------|-----------------|
| I6 | 100100110 | 0110011000100000 | 10101001 |
| I7 | 100100101 | 1001100101000000 | 10101001 |
| I8 | 011010010 | 0000000000011101 | 11001100 |

Referring to steps of FIG, 2, at step 208 of the method of the present disclosure, the one or more hardware processors 104 assign a weightage to each feature and an associated feature value for each of the first insight vector representation, the second insight vector representation, and the third insight vector representation comprised in the final insight vector representation. The assigned weightage is based on the nature of each feature comprised in the final insight vector representation, in one embodiment of the present disclosure.

At step 210 of the method of the present disclosure, the one or more hardware processors 104 compute a first interesting score, a second interesting score, and a third interesting score for each of the first insight vector representation, the second insight vector representation, and the third insight vector representation comprised in the insight vector representation respectively based on the assigned weightage.

At step 212 of the method of the present disclosure, the one or more hardware processors 104 compute a final interesting score based on the first interesting score, the second interesting score, and the third interesting score. The steps 208, 210, and 212 are better understood by way of following description:

The system 100 computes an interesting score to each insight. This helps to form a data-driven point of view about the interestingness of an insight from a statistical perspective.

Different approaches can be used to measure the interestingness of an insight (also referred to an interesting and interchangeably used herein). Clustering approaches as known in the art can be used to group similar insights and then assign an interesting score based on the cluster size they belong to. Anomaly detection approaches as known in the art can be used to identify insights that are different from the rest of the insights and then assign an interesting score based on the extent of anomaly. Interesting subset discovery as known in the art can be another way to measure interestingness score of an insight.

In the present disclosure, the system 100 computes/assigns interesting scores by assigning weights to features and feature values. For instance, the system 100 considers *trends* as an important feature, and further considers *increasing* and *decreasing* trends as more important features than *constant* trend. Consequently, the system 100 assign higher weight to *increasing* and *decreasing* trends and a lower weight to *constant* trend. Table 2 presents an example of interesting score computed for two insights.

## Table 2

| Weight | Low change count | Medium change count | High change count | Low outlier count | Medium outlier count | High outlier count | Constant trend | Increasing trend | Decreasing trend | Day of month pattern | Day of week pattern | Hour of week pattern | No pattern | |
|--------|------------------|---------------------|-------------------|-------------------|----------------------|--------------------|----------------|------------------|------------------|----------------------|---------------------|----------------------|------------|---|
| | 0.1 | 0.2 | 0.3 | 0.1 | 0.2 | 0.3 | 0.1 | 0.3 | 0.3 | 0.3 | 0.3 | 0.3 | 0.1 | |

| Insight 1 | 1 | 0 | 0 | 1 | 0 | 0 | 0 | 0 | 0 | 0 | 0 | 0 | 1 | Score=0.4 |
|---|---|---|---|---|---|---|---|---|---|---|---|---|---|---|
| Insight 2 | 0 | 0 | 1 | 0 | 0 | 1 | 0 | 1 | 0 | 1 | 0 | 0 | 0 | Score=1.12 |

Insight 1 has a low change count, low outlier count, constant trend, and no pattern. This insight gets a lower interesting score of 0.4. On the other hand, Insight 2 has a high change count, high outlier count, increasing trend, and day-of-week pattern. This insight gets a higher interesting score of 1.12.

Note that to explain the concept of interestingness, the system 100 assigns weights in a certain way to give more importance to frequent changes, frequent outliers, a non-constant trend, and patterns. But the user can configure weights to give importance to features as they desire.

The system 100 explained/described the concepts using the features of behavior vectors. Similar concept is applicable to topological and inventory vectors. For instance, in the topological vectors, the system 100 assigns more weight to the branches of the topology tree that serve business critical functions than other branches. In the inventory tree, the system 100 assigns more weight to expensive resources. The system 100 also considers confidence and recency of an insight into the computation of the interesting score, in one embodiment.

Referring to steps of FIG. 2, at step 214 of the method of the present disclosure, the one or more hardware processors 104 generate a first user preference vector, and a second user preference vector using a user profile database. The first user preference vector is a short-term user preference vector, and the second user preference vector is a long-term user preference vector, in one embodiment. The above step of 214 is better understood by way of following description.

The user preference is modelled as the User Preference Vector (UPV). The UPV captures the user's likes and dislikes, and it is modelled as a 3-tuple of vectors to represent the user's preferences against behavior, topology, and inventory. The UPV has the same dimensional structure as the 3 insight vector representations.

$$UPV = \begin{bmatrix} V(I_v) \\ V(B_v) \\ V(T_v) \end{bmatrix}$$

The UPV vectors are initially assigned zeros for all attributes and the value is increased or decreased based on user's likes or dislikes respectively. The value is bounded between +1 and -1, reflecting the user preference for each attribute bit. The range is chosen because it conveniently encapsulates the preferences: -1 signifies strong disliking, 0 represents neutrality and 1 indicates strong liking.

The system 100 used the techniques of additive increase and subtractive decrease (AISD) to adjust weights of various bits of an insight vector based on user feedback. When a user likes an insight, then the system 100 rewards the bits associated with the recommended insight by increasing its weight additively. When a user dislikes an insight, then the system 100 penalizes the bits associated with the insight by decreasing its weight in a subtractive manner. The system 100 performs a weighted AISD to give more weight to recent user feedback. If a user likes an insight I1, then UPV is updated as follows:

$$UPV = w * IV(I_1) + (1 - w) * UPV$$

Here both *UPV* and *IV* are 3-tuples of inventory (I$_v$), behavior *(B$_v$)*, and topology vectors *(T$_v$)*.

$$UPV = w * \begin{Bmatrix} IV(I_v) \\ IV(B_v) \\ IV(T_v) \end{Bmatrix} + (1 - w) * \begin{Bmatrix} UPV(I_v) \\ UPV(B_v) \\ UPV(T_v) \end{Bmatrix}$$

Below Table 3 shows how the UPV changes with user like an insight.

Table 3

| UPV | $\begin{Bmatrix} V(I_v) \\ V(B_v) \\ V(T_v) \end{Bmatrix} = \begin{Bmatrix} 000000000 \\ 0000000000000000 \\ 00000000 \end{Bmatrix}$ |
|---|---|
| I1 | $\begin{Bmatrix} V(I_v) \\ V(B_v) \\ V(T_v) \end{Bmatrix} = \begin{Bmatrix} 010110010 \\ 1001100101000000 \\ 11001100 \end{Bmatrix}$ |
| UPV on liking I1 | $\begin{Bmatrix} V(I_v) \\ V(B_v) \\ V(T_v) \end{Bmatrix} = \begin{Bmatrix} 0, 0.3, 0, 0.3, 0.3, 0, 0, 0.3, 0 \\ 0.3,0,0,0.3,0.3,0,0,0.3,0,0.3,0,0,0,0,0 \\ 0.3,0.3,0,0,0.3,0.3,0,0 \end{Bmatrix}$ |
| UPV on disliking I1 | $\begin{Bmatrix} V(I_v) \\ V(B_v) \\ V(T_v) \end{Bmatrix} = \begin{Bmatrix} 0, -0.3,0, -0.3, -0.3,0,0, -0.3,0 \\ -0.3,0,0, -0.3, -0.3,0,0, -0.3,0, -0.3,0,0,0,0,0 \\ -0.3, -0.3,0,0, -0.3, -0.3,0,0 \end{Bmatrix}$ |

1. It starts with an all zero UPV.
2. The system 100 first shows an insight I1 with {*high change, high outliers, increasing trend, day-of-week pattern*}.
3. The system 100 also shows how the UPV changes when the user likes I1. We consider a weight of 0.3 for the most recent user feedback.
4. The system 100 further shows how the UPV changes when the user dislikes I1 instead of liking it.

The system 100 observed that users have some long-term preferences such as choice of business function or applications. However, they often also have short-term preferences to view only at performance insights or storage insights based on the need of the hour. To capture these aspects, instead of a single UPV, the system 100 maintains two UPVs, a long-term vector and a short-term vector (which are referred to as first user preference vector and second user preference vector respectively and interchangeably used herein). Both vectors have similar structures and are updated based on user's preferences. However, the long-term vector is initialized only once, and the short-term vector is initialized with every user session. The UPV is now computed as a combination of the long-term UPV and the short-term UPV as follows:

$$UPV = \alpha * long\ term\ UPV + (1 - \alpha) * short\ term\ UPV$$

The factor $\alpha$ is used to assign weight to a recommendation based on long-term preferences or short-term preferences. Based on empirical evaluation, the system 100 has set the default value of $\alpha$ to 0.8. The system 100 dynamically adjusts $\alpha$ for each session based on the user's feedback to the recommended insights. The factor $\alpha$ is decreased with each user dislike and increased with each user likes' as follows:

$$\alpha = \alpha - \epsilon * long\ term\ UPV.IVx - feedback)$$

where, *IVx* refers to the current insight presented to the user, *long term UPV. IVx* represents the dot product of long-term *UPV* and the current insight vector, and *feedback* is set to 1 if the user likes the current insight, and 0 otherwise and $\epsilon$ is the learning rate determining how fast $\alpha$ adjusts to user feedback.

Referring to steps of FIG. 2, at step 216 of the method of the present disclosure, the one or more hardware processors 104 generate a recommended set of insights based on (i) a temperature value measure indicative of a recommendation adherence to an insight associated with one of (a) a user preference, and (b) a statistical interesting score, (ii) the first insight vector representation, the second insight vector representation, and the third insight vector representation, (iii) the final interesting score, and (iv) the first user preference vector, and the second user preference vector. The step of 216 is better understood by way of following description:

The system 100 uses a *UPV* to search across the insight vectors to find the most relevant insight for the user. Various measures can be used to match insight vectors with *UPV.* Statistical similarity measures such as Jaccard, Dice, Cosine similarity as known in the art are some effective levers when insights are modeled as sets. Embedding similarity is another effective lever to do the matches when insights are modeled as embeddings. Since the system 100 has modeled insights and *UPV* as numeric vectors, dot-product provides an effective lever to find the most relevant insight. Dot product effectively rewards the liked attributes and penalizes the disliked attributes to recommend the best match. In the choice of similarity measures, the system 100 implemented the dot product as mentioned above due to its ability to effectively capture both the magnitude and direction of vectors, which is crucial in the present disclosure's context. Its computational efficiency makes it particularly advantageous in high-dimensional spaces, allowing for faster calculations compared to other measures like cosine similarity. Furthermore, while embeddings trained on general English data may introduce irrelevant similarities, the dot product maintains consistency and relevance in our specific ITOps and AIOps use cases. By using the dot product for comparisons, the system 100 ensures accuracy and meaningful results tailored to a specific domain (in the current scenario IT domain). Thus, the dot product emerges as a versatile and efficient tool for assessing similarity in the applications.

The dot product of two vectors is the sum of the products of their corresponding components.

$$Dot\ product\ (A, B) = \sum_{i=1}^{n} A_i \times B_i$$

For example, the dot product of two vectors, a= [a1, a2, a3...an] and b = [b1, b2, b3...bn] is computed as follows:

$$a.b = a1*b1 + a2*b2 + \ldots + an*bn.$$

The system 100 computes the dot product of *UPV* with each insight vector *IVx* to compute the score of each insight *Score (IVx).*

$$Score(IVx) = UPV.IVx$$

$$Score(IVx) = \begin{Bmatrix} UPV(I_v) \\ UPV(B_v) \\ UPV(T_v) \end{Bmatrix} . \begin{Bmatrix} IV(I_v) \\ IV(B_v) \\ IV(T_v) \end{Bmatrix}$$

$$Score(IVx) = UPV(I_v).IV(I_v) + UPV(B_v).IV(B_v) + UPV(T_v).IV(T_v)$$

Continuing the example from below Table 3, which shows the dot product of the UPV with other insights. Dot product of UPV with insights I2, I3, and I7 leads to respective scores of3, 2.7, and 2.4 as shown in Table 4 below. Consequently, the next recommended insight is I2.

Table 4

| | | |
|---|---|---|
| $UPV.I2$ | $\begin{Bmatrix} V(I_v) \\ V(B_v) \\ V(T_v) \end{Bmatrix}$ $= \begin{Bmatrix} 0, 0.3, 0, 0.3, 0.3, 0, 0, 0.3, 0 \\ 0.3,0,0,0.3,0.3,0,0,0.3,0,0.3,0,0,0,0,0,0 \\ 0.3,0.3,0,0,0.3,0.3,0,0 \end{Bmatrix}$ $\begin{Bmatrix} 0,1,0,1,1,0,0,1,0 \\ 1,0,0,1,1,0,0,1,0,1,0,0,0,0,0,0 \\ 1,1,0,0,1,1,0,0, \end{Bmatrix} = \begin{Bmatrix} 0.9 \\ 0.9 \\ 1.2 \end{Bmatrix}$ | Score=3 |
| $UPV.I3$ | $\begin{Bmatrix} V(I_v) \\ V(B_v) \\ V(T_v) \end{Bmatrix}$ $= \begin{Bmatrix} 0, 0.3, 0, 0.3, 0.3, 0, 0, 0.3, 0 \\ 0.3,0,0,0.3,0.3,0,0,0.3,0,0.3,0,0,0,0,0,0 \\ 0.3,0.3,0,0,0.3,0.3,0,0 \end{Bmatrix}$ $\begin{Bmatrix} 0,1,0,1,0,1,0,1,0 \\ 1,0,0,1,1,0,0,1,0,1,0,0,0,0,0,0 \\ 1,0,1,1,0,0,1,0 \end{Bmatrix} = \begin{Bmatrix} 0.9 \\ 1.5 \\ 0.3 \end{Bmatrix}$ | Score=2.7 |
| $UPV.I7$ | $\begin{Bmatrix} V(I_v) \\ V(B_v) \\ V(T_v) \end{Bmatrix}$ $= \begin{Bmatrix} 0, 0.3, 0, 0.3, 0.3, 0, 0, 0.3, 0 \\ 0.3,0,0,0.3,0.3,0,0,0.3,0,0.3,0,0,0,0,0,0 \\ 0.3,0.3,0,0,0.3,0.3,0,0 \end{Bmatrix}$ $\begin{Bmatrix} 1,0,0,1,0,0,1,0,1 \\ 1,0,0,1,1,0,0,1,0,1,0,0,0,0,0,0 \\ 1,0,1,0,1,0,0,1 \end{Bmatrix} = \begin{Bmatrix} 0.3 \\ 1.5 \\ 0.6 \end{Bmatrix}$ | Score=2.4 |

Below illustrates introduction an element of randomness (also referred to a temperature value measure.

To enable random explorations from time to time, the system 100 introduced the concept of temperature value measure (also referred to as temperature and interchangeably used herein). Temperature is a bounded metric between 0 and 1 and is a measure of how much the recommendations should adhere to user preferences. When the temperature is set to 0 then the insights are recommended purely based on user preference. When the temperature is set to 1 then the insights are recommended purely based on precomputed statistical interestingness scores. For cases where the temperature is between 0 and 1, say x, then (1-x) is used as a probability to make a recommendation based on user-preferences.

Once the insights are recommended, the system 100 further generates one or more contextually consistent chains of insights using (i) the first user preference vector, and the second user preference vector, and (ii) the first insight vector representation, the second insight vector representation, and the third insight vector representation. To generate the one or more contextually consistent chains of insights, the system 100 first identifies a relationship between two or more insights using (a) an associated similarity score derived from (i) the first user preference vector, and the second user preference vector, and (ii) the first insight vector representation, the second insight vector representation, and the third insight vector representation, and (b) an associated weight. Further, the one or more chains of insights that exhibit a specific connection are generated based on the identified relationship. A divergence measuring technique is then applied on the one or more chains of insights to obtain one or more contextually consistent chains of insights. The above steps of creating one or more chains of insights and generating the one or more contextually consistent chains of insights are better understood by way of following description:

In the world of IT operations insights, stopping at one insight is often insufficient, and the user benefits more by seeing a chain of related insights. Consider the following insight:

*A server Sx is observing frequent outliers in its CPU utilization*

If a user likes this insight, then after seeing this insight, they would like to see more insights to get better understanding of the problem space. Some commonly opted exploration directions are as follows:

1. What is the cause of these frequent outliers in Sx?
2. What is the impact of these frequent outliers in Sx?
3. Which other similar servers are observing frequent outliers? Is there is common pattern present?
4. Is there anything else happening on Sx?

The system 100 addresses such questions by automatically creating chains of insights using 3 types of chains as illustrated below:

1. Causality chains: These chains are useful to do root-cause analysis and faultimpact analysis. Such chains can be derived by looking for high topological and behavioral similarity.
2. Tribe chains: These chains are useful to perform management of an inventory of resources with a point of view of cost, capacity, security, etc. Such chains can be derived by looking for high inventory and behavioral similarity.
3. Inductive chains: These chains are more open ended where similar insights are analysed (e.g., either by the system 100 or via user inputs) and then common pattern within these insights are inferred. Such chains are created by looking for high behavioral similarity. It is to be understood by a person having ordinary skilled in the art or person skilled in the art that such examples of insight chains shall not be construed as limiting the scope of the present disclosure.

The system 100 considers below 2 factors while creating chains:

1. Insight similarity: To create different types of chains, a weight vector is introduced to similarity computation. Based on the chain of interest, different weights are assigned to inventory *(Wi),* behavior *(Wb),* and topology *(Wt)* weights in the below equation.

$$Score(IVx) = \begin{Bmatrix} W_i \\ W_b \\ W_t \end{Bmatrix} . \begin{Bmatrix} UPV(I_v) \\ UPV(B_v) \\ UPV(T_v) \end{Bmatrix} . \begin{Bmatrix} IV(I_v) \\ IV(B_v) \\ IV(T_v) \end{Bmatrix}$$

2. Insight divergence: The system 100 uses a divergence factor (divergence measuring technique) to make sure that the insights do not digress too far from the starting point of a chain. For each new insight *Ix* that is identified for the addition to the chain, the system 100 compute its divergence from the first insight in the chain, *I1*. The insight is added to the chain only if the divergence is within a predefined threshold, else the chain is truncated. The divergence between two insights A and B is computed by deriving the projection of A on B as follows:

$$Divergence(A, B) = \sqrt{\sum_{i=1}^{n} \left( A_i - \left( \frac{A.B}{B.B} B_i \right) \right)^2}$$

Once the one or more contextually consistent chains of insights are generated, the system 100 then assess/evaluates quality of the one or more contextually consistent chains of insights based on at least one of (i) a length of a chain, (ii) a traversing quality in a topological path and a topological sequence, (iii) a connection of insights of two or more entities that belong to a specific subtree in an insight vector representation, and (iv) an associated behavioral similarity. The above step of quality evaluation/assessment is better understood by way of following description:

Different chains need to be evaluated on different measures to assess their quality.

*1. Evaluating causality chains:* Causality chains are evaluated on the length of the chain and how well the chain traverses the topological path and the topological sequence. To evaluate these aspects, topological score is derived/defined which assesses that for a given chain, the insights are from entities that belong to the same topology branch.

$$Topology\ Score = \sum_{i=1}^{n-1}\left(\frac{R(insight_i, insight_{i+1})}{d(insight_i, insight_{i+1})}\right)$$

where, $insight_i$ is the i-th insight in a chain, $R(insight_i, insight_{i+1})$ is reachability function, which is 1 if the entity of $insight_{i+1}$ is reachable from the entity in $insight_i$, and 0 otherwise, and $d(insight_i, insight_{i+1})$ is the distance between the entities of two consecutive insights $insight_i$ and $insight_{i+1}$ in topology graph.

This score emphasizes both connectivity and proximity between insights. The score would be higher if the entities form the chain have small distance and high reachability.

*2. Evaluating tribe chains:* Tribe chains are evaluated on the length of the chain and how well the chain follows the inventory graph and connects insights of entities that belong to same inventory subtree. To evaluate these aspects, tribe score is expressed/defined as follows:

$$Tribe\ Score = \frac{E}{h(t)} * \frac{N}{L(LCA)}$$

*E* is the number of edges from the leaf nodes to *LCA* (chain), where *LCA* = lower common ancestor, $h(t)$ is the maximum height of the tree, *N* is the number of nodes in the chain, and $L(LCA)$ is the total number of leaves under the *LCA*. This score considers the tree structure of insights, penalizing chains that span greater distances in the hierarchy, and favoring chains that form tightly clustered insights under a common ancestor.

*3. Evaluating inductive chains:* Inductive chains are evaluated on the length of the chain and their behavioral similarity. These chains should connect insights with similar behavior such that generalized inferences can be derived about the commonality in these chains. To evaluate these aspects, the inductive score of a chain is derived/defined by averaging the dot product of the behavior vector of consecutive insights in a chain.

EXPERIMENTAL EVALUATION

The system 100 of the present disclosure evaluated the effectiveness of the method of FIG. 2 on synthetic and real-world datasets.

Comparative evaluation

The system 100 presents a comparison of the method of the present disclosure with a conventional approach (e.g., with the results of r-by-e approach). A movie dataset was used to recommend movies based on user preferences. The method of the present disclosure was applied on the same dataset to recommend movies and evaluate the recommendations with the recommendations of the conventional approach.

Dataset: Conventional approach presented an evaluation of their recommendations using the hetrec2011-movielens-2k dataset (e.g., publicly available dataset). This dataset included over 2,000 users' movie ratings, along with metadata such as genre, tags, and actors, providing a rich foundation for evaluating recommendation systems. The dataset was split into an 80:20 ratio for training and testing.

Vector creation: The system 100 used the following method to create IVs and UPVs. The system 100 created behavior vectors for movies using the metadata of various attributes. The system 100 used user ratings to create UPVs. Ratings greater than equal to 6.0 were treated as *likes,* while ratings below 6.0 were considered *dislikes.*

*Evaluation metrics:* As presented in a conventional approach, the system 100 used the following metrics to evaluate the two methods:

1. Precision: This is the fraction of relevant items in the recommended list Ru for each test user u.

2. Diversity: This measures the diversity of the recommendation list Ru as the average pairwise distance among its elements. In content-based settings, the distance between two items (i,j) was computed as the complement of their Jaccard similarity computed on their features sim(Fi ,Fj ).

3. Surprise: This measures the surprise of a recommended item as the minimum distance between the item and items in the user's profile Pu. This is averaged over the recommended items i ∈ Ru.

*Comparative evaluation:* Table 5 presents a comparison of the method of the present disclosure with the conventional r-by-e approach across key metrics. The results show that the method of the present disclosure outperforms r-by-e in precision and surprise, indicating more accurate and insightful recommendations. While r-by-e demonstrates better diversity, the method of the present disclosure balances diversity with higher precision, suggesting that recommended/generated insight chains provide more relevant and unexpected recommendations without sacrificing uniqueness. Overall, the method of the present disclosure is better suited for applications where precision and insightful connections are critical.

Table 5

|  | Precision | Diversity | Surprise |
|---|---|---|---|
| **Method of the present disclosure** | 0.554 | 0.4599 | 0.8207 |
| **r-by-e (prior art)** | 0.1089 | 0.9352 | 0.7834 |

Case study

A case-study is presented where the method of the present disclosure was applied to analyze insights for a leading American retailer with over 250 stores across different geographies.

The system 100 analyzed the IT operations of various retail stores and generated over 56,653 insights. These insights are of different types.

1. Insights about changes, trends, patterns, outliers in various metrics such as application response time, item scanning time, CPU utilization, disk IO, etc.
2. Insights about patterns in various events and incidents such as server down, backup failure, application not reachable, etc.
3. Insights about future behavior of different metrics and potential risks in future.
4. Insights about opportunities to suppress false alerts.

Experiment design:

The system 100 and the method were implemented on these insights. The effectiveness of the method of the present disclosure was assessed by comparing the number of clicks it took to reach insights of interest. 56,653 insights were generated from 170 unique insight vectors. 10 of these 170 insight vectors were randomly selected. For each insight vector, the users provided their inputs in terms of like, dislike the insights until they reached the insight with the selected insight vector. The number of clicks required to reach the insight of interest was then measured by the system 100.

The system 100 compared the effectiveness of the method of the present disclosure by varying the levels of temperature value measure. A temperature value of 0 indicates that the recommendation of an insight completely adhered to user preferences while giving a recommendation. A temperature value of 1 indicates that user preference has not be considered at all and the system 100 only goes by the computed interestingness scores (e.g., statistical interesting score/precomputed interestingness score). The system 100 also compared the method of the present disclosure with an approach where no intelligence is applied, and only shows random insights until the insight of interest is reached. This random approach is equivalent to today's manual approach of skimming the insights.

Effectiveness of the method of the present disclosure:

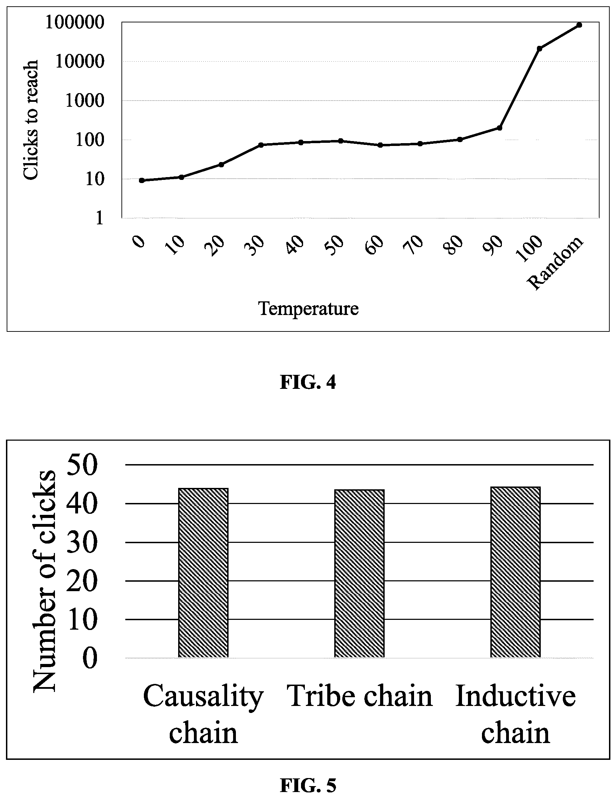

FIG. 4, with reference to FIGS. 1 through 3C, is a graphical representation illustrating the number of clicks required to reach the insight of interest with varying temperature value measure, in accordance with an embodiment of the present disclosure. Each datapoint is an average of 10 runs. FIG. 4 shows that the method of the present disclosure can reach the insight of interest in 5 clicks with a temperature of 0. The number of clicks increases as the temperature value measure is increased. If user preferences are completely ignored and the system 100 relies only on statistical interestingness (case of temperature = 1), then it takes 90 to 100 number of clicks to reach insights of interest. The method of the present disclosure significantly outperforms the conventional random approach which takes anywhere between 100 to 5000 clicks to reach the insight of interest.

Evaluation of insight chains

For closer inspection, the system 100 identified a subset of inventory and associated 50 insights and derived insight chains. Table 6 summarizes the score for the 3 representative chains.

Table 6

|  | Chain length | Topology score | Tribe score | Inductive score |
|---|---|---|---|---|
| Causality chain | 7 | 0.83 | 1.175 | 2.6 |
| Tribe chain | 7 | 0.66 | 1.27 | 2.33 |
| Inductive chain | 7 | 0.16 | 0.08 | 2.4 |

It can be seen that each chain scores high on their respective scores.

Insight chains significantly reduce the number of clicks required for the user to reach these insights of interest. The system 100 performed an experiment to assess how many clicks it would take for a user to derive these chains manually. For the 3 chains discussed above, FIG. 5, with reference to FIGS. 1 through 4, is a graphical representation illustrating the number of clicks required to infer the chains manually, in accordance with an embodiment of the present disclosure. Each data point is an average of 10 experiment runs. It would take an average of 40 clicks to manually infer these chains. With auto-derived insight chains, this inference can be made in just one click.

As mentioned, recommendation systems are prevalent in many industries that need to interact with users and present them with a large volume of inventory items. Some examples include online retail stores, video-on-demand services, news, or even social network platforms. These use behavior data to infer user preferences and recommend the relevant content to the users. Most of these industry domains do not even face the need to create chains of recommendations. Unlike these domains, while consuming the insights IT operations, individual insights are not as useful as the chains of insights.

Broadly these approaches can be grouped into two classes: collaborative methods, and content-based methods. Collaborative methods as known in the art identify other users with similar preferences and make recommendations based on what other similar users liked in the past. Content-based methods as known in the art instead make recommendations by identifying the items similar to the items liked by the active user.

The present disclosure specifically addresses the creation of chains of insights in the field of IT operations. The conventional Recommendation-by-Explanation (r-by-e) approach constructs Explanation Chains to support recommendations by linking a candidate item to previously liked items from the user's profile. These chains are built based on feature similarity, with each item contributing to the explanation of the candidate's recommendation. However, it is important to note that the chains generated by r-by-e are not designed to create a story or connect insights into a larger context; instead, they primarily aim to explain individual recommendations without forming a chain of related insights. This limitation highlights the need for new approaches that can effectively connect insights into a broader framework, which is addressed by providing a technical solution by the system 100 and method of the present disclosure.

In contrast to the r-by-e approach, the system 100 and the method create insight chains by connecting multiple insights across different entities and metrics, forming a comprehensive data story. Unlike r-by-e, which uses feature similarity to explain a single recommendation, the method of the present disclosure focuses on generating insight chains based on behavioral, topological, and inventory relationships. This allows the system 100 to provide a broader, more meaningful context that reflects the complex nature of IT operations, enabling users to understand how insights are interconnected and how they influence each other. The system 100 and the method of the present disclosure differ in that it not only identifies relevant insights based on user preferences but also creates a sequence of insights that together reveal a bigger picture, facilitating decision-making and reducing insight fatigue.

With increasing focus on observability and analytics, organizations are flooded with analytics insights and often struggle to sift through these insights to identify the relevant ones. When it comes to defining the relevance of an insight, there is no single answer. Different users may have different preferences, and these preferences may change with time. In the present disclosure, the system 100 and the method described herein address problems by recommending insights based on user preferences and adapting the insight search based on user's likes and dislikes. It is to be understood by a person having ordinary skill in the art that though the examples described herein pertain to IT domain, the system 100 and the method can be implemented in any other domain(s), and such examples shall not be construed as limiting the scope of the present disclosure.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an applicationspecific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computerusable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1.   A processor implemented method, comprising:

receiving, via one or more hardware processors, a first data, a second data, and a third data, pertaining to one or more event insights (202);
generating, via the one or more hardware processors, a first insight vector representation, a second insight vector representation, and a third insight vector representation, pertaining to the first data, the second data, and the third data respectively (204);
generating, via the one or more hardware processors, a final insight vector representation based on the first insight vector representation, the second insight vector representation, and the third insight vector representation (206);
assigning, via the one or more hardware processors, a weightage to each feature and an associated feature value for each of the first insight vector representation, the second insight vector representation, and the third insight vector representation comprised in the final insight vector representation (208);
computing, via the one or more hardware processors, a first interesting score, a second interesting score, and a third interesting score for each of the first insight vector representation, the second insight vector representation, and the third insight vector representation comprised in the insight vector representation respectively based on the assigned weightage (210);
computing, via the one or more hardware processors, a final interesting score based on the first interesting score, the second interesting score, and the third interesting score (212);

generating, via the one or more hardware processors, a first user preference vector, and a second user preference vector using a user profile database (214); and

generating, via the one or more hardware processors, a recommended set of insights based on (i) a temperature value measure indicative of a recommendation adherence to an insight associated with one of (a) a user preference, and (b) a statistical interesting score, (ii) the first insight vector representation, the second insight vector representation, and the third insight vector representation, (iii) the final interesting score, and (iv) the first user preference vector, and the second user preference vector (216).

2. The processor implemented method as claimed in claim 1, wherein the assigned weightage is based on a nature of each feature comprised in the final insight vector representation.

3. The processor implemented method as claimed in claim 1, wherein the first insight vector representation is generated by:

determining a number of parameters and an associated value comprised in the first data;
transforming the number of parameters into a specific value to obtain a set of transformed parameters; and
applying a one-hot-encoding technique on the set of transformed parameters to obtain the first insight vector representation.

4. The processor implemented method as claimed in claim 1, wherein the second insight vector representation and the third insight vector representation are generated by:

creating a n-bit vector for one or more entities comprised in the second data and the third data associated with a graph respectively;
initializing a plurality of bits to a specific value;
assigning, based on the plurality of initialized bits, a weight to each entity amongst the one or more entities and an entity value that is reachable from an insight node in the graph, wherein the assigned weight is based on a shortest path determined between at least two nodes; and
obtaining the second insight vector representation and the third insight vector representation based on the assigned weight.

5. The processor implemented method as claimed in claim 1, further comprising generating one or more contextually consistent chains of insights using (i) the first user preference vector, and the second user preference vector, and (ii) the first insight vector representation, the second insight vector representation, and the third insight vector representation.

6. The processor implemented method as claimed in claim 5, wherein the one or more contextually consistent chains of insights are generated by:

identifying a relationship between two or more insights using (a) an associated similarity score derived from (i) the first user preference vector, and the second user preference vector, and (ii) the first insight vector representation, the second insight vector representation, and the third insight vector representation, and (b) an associated weight;
generating the one or more chains of insights that exhibit a specific connection based on the identified relationship; and
applying a divergence measuring technique on the one or more chains of insights to obtain one or more contextually consistent chains of insights

7. The processor implemented method as claimed in claim 5, wherein quality of the one or more contextually consistent chains of insights is assessed based on at least one of (i) a length of a chain, (ii) a traversing quality in a topological path and a topological sequence, (iii) a connection of insights of two or more entities that belong to a specific subtree in an insight vector representation, and (iv) an associated behavioral similarity.

8. A system (100), comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:

receive a first data, a second data, and a third data, pertaining to one or more event insights;

generate a first insight vector representation, a second insight vector representation, and a third insight vector representation, pertaining to the first data, the second data, and the third data respectively;

generate a final insight vector representation based on the first insight vector representation, the second insight vector representation, and the third insight vector representation;

assign a weightage to each feature and an associated feature value for each of the first insight vector representation, the second insight vector representation, and the third insight vector representation comprised in the final insight vector representation;

compute a first interesting score, a second interesting score, and a third interesting score for each of the first insight vector representation, the second insight vector representation, and the third insight vector representation comprised in the insight vector representation respectively based on the assigned weightage;

compute a final interesting score based on the first interesting score, the second interesting score, and the third interesting score;

generate a first user preference vector, and a second user preference vector using a user profile database; and

generate a recommended set of insights based on (i) a temperature value measure indicative of a recommendation adherence to an insight associated with one of (a) a user preference, and (b) a statistical interesting score, (ii) the first insight vector representation, the second insight vector representation, and the third insight vector representation, (iii) the final interesting score, and (iv) the first user preference vector, and the second user preference vector.

9. The system as claimed in claim 8, wherein the assigned weightage is based on a nature of each feature comprised in the final insight vector representation.

10. The system as claimed in claim 8, wherein the first insight vector representation is generated by:

determining a number of parameters and an associated value comprised in the first data;

transforming the number of parameters into a specific value to obtain a set of transformed parameters; and

applying a one-hot-encoding technique on the set of transformed parameters to obtain the first insight vector representation.

11. The system as claimed in claim 8, wherein the second insight vector representation and the third insight vector representation are generated by:

creating a n-bit vector for one or more entities comprised in the second data and the third data associated with a graph respectively;

initializing a plurality of bits to a specific value;

assigning, based on the plurality of initialized bits, a weight to each entity amongst the one or more entities and an entity value that is reachable from an insight node in the graph, wherein the assigned weight is based on a shortest path determined between at least two nodes; and

obtaining the second insight vector representation and the third insight vector representation based on the assigned weight.

12. The system as claimed in claim 8, wherein the one or more hardware processors are further configured to generate one or more contextually consistent chains of insights using (i) the first user preference vector, and the second user preference vector, and (ii) the first insight vector representation, the second insight vector representation, and the third insight vector representation.

13. The system as claimed in claim 12, wherein the one or more contextually consistent chains of insights are generated by:

identifying a relationship between two or more insights using (a) an associated similarity score derived from (i) the first user preference vector, and the second user preference vector, and (ii) the first insight vector representation, the second insight vector representation, and the third insight vector representation, and (b) an associated weight;

generating the one or more chains of insights that exhibit a specific connection based on the identified relationship; and

applying a divergence measuring technique on the one or more chains of insights to obtain one or more contextually consistent chains of insights

14. The system as claimed in claim 12, wherein quality of the one or more contextually consistent chains of insights is assessed based on at least one of (i) a length of a chain, (ii) a traversing quality in a topological path and a topological sequence, (iii) a connection of insights of two or more entities that belong to a specific subtree in an insight vector representation, and (iv) an associated behavioral similarity

15. One or more non-transitory machine-readable information storage mediums comprising one or more instructions which when executed by one or more hardware processors cause:

receiving a first data, a second data, and a third data, pertaining to one or more event insights;

generating a first insight vector representation, a second insight vector representation, and a third insight vector representation, pertaining to the first data, the second data, and the third data respectively;

generating a final insight vector representation based on the first insight vector representation, the second insight vector representation, and the third insight vector representation;

assigning a weightage to each feature and an associated feature value for each of the first insight vector representation, the second insight vector representation, and the third insight vector representation comprised in the final insight vector representation;

computing a first interesting score, a second interesting score, and a third interesting score for each of the first insight vector representation, the second insight vector representation, and the third insight vector representation comprised in the insight vector representation respectively based on the assigned weightage;

computing a final interesting score based on the first interesting score, the second interesting score, and the third interesting score;

generating a first user preference vector, and a second user preference vector using a user profile database; and

generating a recommended set of insights based on (i) a temperature value measure indicative of a recommendation adherence to an insight associated with one of (a) a user preference, and (b) a statistical interesting score, (ii) the first insight vector representation, the second insight vector representation, and the third insight vector representation, (iii) the final interesting score, and (iv) the first user preference vector, and the second user preference vector.

SYSTEM
100

MEMORY
102

DATABASE
108

HARDWARE PROCESSOR(S)
104

INTERFACE(S)
106

**FIG. 1**

receiving a first data, a second data, and a third data, pertaining to one or more event insights ⌐~ 202

↓

generating a first insight vector representation (FIVR), a second insight vector representation (SIVR), and a third insight vector representation (TIVR), pertaining to the first data, the second data, and the third data respectively ⌐~ 204

↓

generating a final insight vector representation based on the FIVR, SIVR, and TIVR ⌐~ 206

↓

assigning a weightage to each feature and an associated feature value for each of the FIVR, SIVR, and TIVR comprised in the final insight vector representation ⌐~ 208

↓

computing a first interesting score (FIS), a second interesting score, (SIS) and a third interesting score (TIS) for each of the FIVR, SIVR, and TIVR comprised in the insight vector representation respectively based on the assigned weightage ⌐~ 210

↓

computing a final interesting score based on the FIS, SIS, and TIS ⌐~ 212

↓

generating a first user preference vector, and a second user preference vector using a user profile database ⌐~ 214

↓

generating a recommended set of insights based on (i) a temperature value measure indicative of a recommendation adherence to an insight associated with one of (a) a user preference, and (b) a statistical interesting score, (ii) the first insight vector representation, the second insight vector representation, and the third insight vector representation, (iii) the final interesting score, and (iv) the first user preference vector, and the second user preference vector ⌐~ 216

**FIG. 2**

First insight vector representation (Behaviour insight vector representation)

| Low change count | Medium change count | High change count | Low outlier count | Medium outlier count | High outlier count | Constant Trend | Increasing Trend | Decreasing Trend |
|---|---|---|---|---|---|---|---|---|
| 1 | 0 | 0 | 0 | 1 | 0 | 0 | 1 | 0 |

| Day of month pattern | Day of week pattern | Hour of day pattern | No pattern |
|---|---|---|---|
| 1 | 0 | 0 | 0 |

**FIG. 3A**

Second insight vector representation (Topology insight vector representation)

Billing, iis1, iis2, tomcat1, oracle1, mssql1, vm1, vm2, vm3, vm4

VM-1 topology: 1/3, ½, ¼, ¼, 1/3, 1/5, 1, ¼,1/5, 1/6

**FIG. 3B**

Third insight vector representation (Inventory insight vector representation)

**FIG. 3C**

**FIG. 4**

**FIG. 5**

| | Europäisches Patentamt European Patent Office Office européen des brevets | **EUROPEAN SEARCH REPORT** | **Application Number** EP 25 20 3012 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | QU HUIYING ET AL: "A Knowledge-Graph-Driven Method for Intelligent Decision Making on Power Communication Equipment Faults", ELECTRONICS, [Online] vol. 12, no. 18, 18 September 2023 (2023-09-18), page 3939, XP093368945, Basel, Switzerland ISSN: 2079-9292, DOI: 10.3390/electronics12183939 Retrieved from the Internet: URL:https://www.mdpi.com/2079-9292/12/18/3939> [retrieved on 2026-02-20] * the whole document * ----- | 1-15 | INV. G06F40/216 G06F40/30 G06F16/335 |
| A | US 2022/237232 A1 (QUAMAR ABDUL [US] ET AL) 28 July 2022 (2022-07-28) * the whole document * ----- | 1,8,15 | |
| A | QIAN CHENG ET AL: "AI for IT Operations (AIOps) on Cloud Platforms: Reviews, Opportunities and Challenges", ARXIV.ORG, CORNELL UNIVERSITY LIBRARY, 201 OLIN LIBRARY CORNELL UNIVERSITY ITHACA, NY 14853, 10 April 2023 (2023-04-10), XP091480757, * the whole document * ----- | 1,8,15 | TECHNICAL FIELDS SEARCHED (IPC) G06F |
| A | EP 3 070 661 A1 (TATA CONSULTANCY SERVICES LTD [IN]) 21 September 2016 (2016-09-21) * the whole document * ----- -/-- | 1,8,15 | |

The present search report has been drawn up for all claims

| Place of search | Date of completion of the search | Examiner |
|---|---|---|
| Berlin | 24 February 2026 | Stauch, Marc |

EPO FORM 1503 03.82 (P04C01)

Europäisches
Patentamt

European
Patent Office

Office européen
des brevets

# EUROPEAN SEARCH REPORT

**Application Number**

EP 25 20 3012

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TINGTING WANG ET AL: "A Comprehensive Survey on Root Cause Analysis in (Micro) Services: Methodologies, Challenges, and Trends", ARXIV.ORG, CORNELL UNIVERSITY LIBRARY, 201 OLIN LIBRARY CORNELL UNIVERSITY ITHACA, NY 14853, 23 July 2024 (2024-07-23), XP091836731, * abstract * | 1,8,15 | |

-----

TECHNICAL FIELDS
SEARCHED      (IPC)

The present search report has been drawn up for all claims

| Place of search | Date of completion of the search | Examiner |
|---|---|---|
| Berlin | 24 February 2026 | Stauch, Marc |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                 

& : member of the same patent family, corresponding
    document

EPO FORM 1503 03.82 (P04C01)

page 2 of 2

## ANNEX TO THE EUROPEAN SEARCH REPORT
## ON EUROPEAN PATENT APPLICATION NO.

EP 25 20 3012

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2026

| Patent document cited in search report | Publication date | Patent family member(s) | Publication date |
|---|---|---|---|
| US 2022237232 A1 | 28-07-2022 | NONE | |
| EP 3070661 A1 | 21-09-2016 | EP 3070661 A1 | 21-09-2016 |
| | | US 2016275594 A1 | 22-09-2016 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421093804